Europäisches Patentamt

European Patent Office

Office européen des brevets

(19)

(11) Numéro de publication: **0 096 618 B1**

(12) # FASCICULE DE BREVET EUROPEEN

(45) Date de publication du fascicule du brevet:
06.08.86

(51) Int. Cl.⁴: **F 27 B 3/08,** C 21 C 5/52, H 05 B 7/00, F 27 D 11/08

(21) Numéro de dépôt: **83401045.6**

(22) Date de dépôt: **26.05.83**

(54) Procédé de fusion métallurgique et four à arc pour sa mise en oeuvre.

(30) Priorité: **01.06.82 FR 8209486**

(43) Date de publication de la demande:
**21.12.83 Bulletin 83/51**

(45) Mention de la délivrance du brevet:
**06.08.86 Bulletin 86/32**

(84) Etats contractants désignés:
**AT BE CH DE GB IT LI LU NL SE**

(56) Documents cités:
**EP - A - 0 023 058
DE - A - 2 355 168
DE - A - 2 510 326
FR - A - 384 096
FR - A - 2 197 988
FR - A - 2 381 435**

(73) Titulaire: **INSTITUT DE RECHERCHES DE LA SIDERURGIE FRANCAISE (IRSID), 185, rue du Président Roosevelt, F-78105 Saint Germain-en-Laye Cédex (FR)**
Titulaire: **CLECIM SA, 107 boulevard de la Mission Marchand, F-92402 Courbevoie Cedex (FR)**

(72) Inventeur: **Motte, Jean-Pierre, 15, rue du coupillon, F-57050 Metz-Devant-Les-Ponts (FR)**
Inventeur: **Maurer, Ghislain, 2, rue des Anémones, F-57000 Metz (FR)**

(74) Mandataire: **Ventavoli, Roger et al, INSTITUT DE RECHERCHES DE LA SIDERURGIE FRANCAISE (IRSID) 185, rue Président Roosevelt, F-78105 Saint-Germain-en-Laye (FR)**

ACTORUM AG

## Description

La présente invention concerne les techniques de fusion par arc électrique du type de celles qui sont utilisées en métallurgie, pour fondre les métaux et alliages, ou tous matériaux conducteurs.

On utilise en métallurgie des fours à arc qui permettent de provoquer la circulation d'un courant électrique à travers une masse conductrice à fondre par au moins un arc électrique créé entre cette masse et une électrode de voûte disposée au-dessus d'elle.

Actuellement, les fours de ce genre fonctionnent le plus souvent avec du courant alternatif triphasé, appliqué sur trois électrodes de voûte disposées au-dessus de la masse à fondre. On crée donc en fait trois arcs, respectivement entre chacune des électrodes et la masse à fondre qui représente le neutre, et chacun de ces arcs fonctionne en courant alternatif, chaque électrode étant alternativement au pôle positif et au pôle négatif. Cette solution a l'inconvénient d'être coûteuse en consommation d'électrodes, ainsi que de limiter la puissance de chauffage électrique en raison de difficultés liées à l'instabilité des arcs.

Pour résoudre ces problèmes, il a déjà été proposé une solution selon laquelle l'alimentation électrique s'effectue en courant continu, avec création d'un arc unique. Mais la disposition connue implique alors qu'une autre électrode, de polarité opposée à celle qui est disposée au-dessus de la masse à fondre, traverse la sole du four pour assurer grâce à un contact électrique direct avec le fond de cette masse le retour du courant. On se heurte alors à des difficultés de montage et de fonctionnement, liées à cette électrode, de puissance en sole. Les limites technologiques imposées par la nécessité de traverser les parois réfractaires du four, le contact avec les métaux en cours de fusion, le dimensionnement de l'électrode, la nécessité de la refroidir, etc. . . . font que l'on ne sait pas conduire de cette manière les fortes puissances qui seraient souhaitables pour les fours de grande capacité.

L'invention apporte l'avantage par rapport aux techniques connues, de permettre une alimentation en courant continu tout en évitant l'emploi d'une électrode de puissance en sole, de sorte qu'il devient possible de mettre à profit des facilités de fonctionnement apportées par le courant continu aux fortes puissances.

Elle a pour objet un procédé de fusion métallurgique, suivant lequel on provoque la circulation d'un courant électrique dans une masse conductrice à fondre, par au moins un arc électrique créé entre cette masse et une électrode de puissance en voûte, qui se caractérise en ce que l'on crée deux tels arcs électriques, chacun avec l'une des électrodes d'une paire de deux électrodes, que l'on alimente chacune en courant continu, respectivement sous deux polarités différentes.

L'invention a aussi pour objet un four de fusion métallurgique, permettant la mise en œuvre d'un tel procédé, four comportant au moins une paire d'électrodes de puissance en voûte, pour la création d'arcs électriques entre chaque électrode et la masse métallique à fondre, et des moyens d'alimentation électrique pour appliquer un courant continu à chacune des électrodes de ladite paire, respectivement sous deux polarités différentes.

De préférence, il est prévu que le four soit équipé d'une sonde conductrice en contact avec la masse à fondre à travers le fond du four, cette sonde, sensible au potentiel pris par la masse, permettant d'utiliser cette information pour le contrôle des paramètres des arcs dans l'équipement habituel de régulation des électrodes.

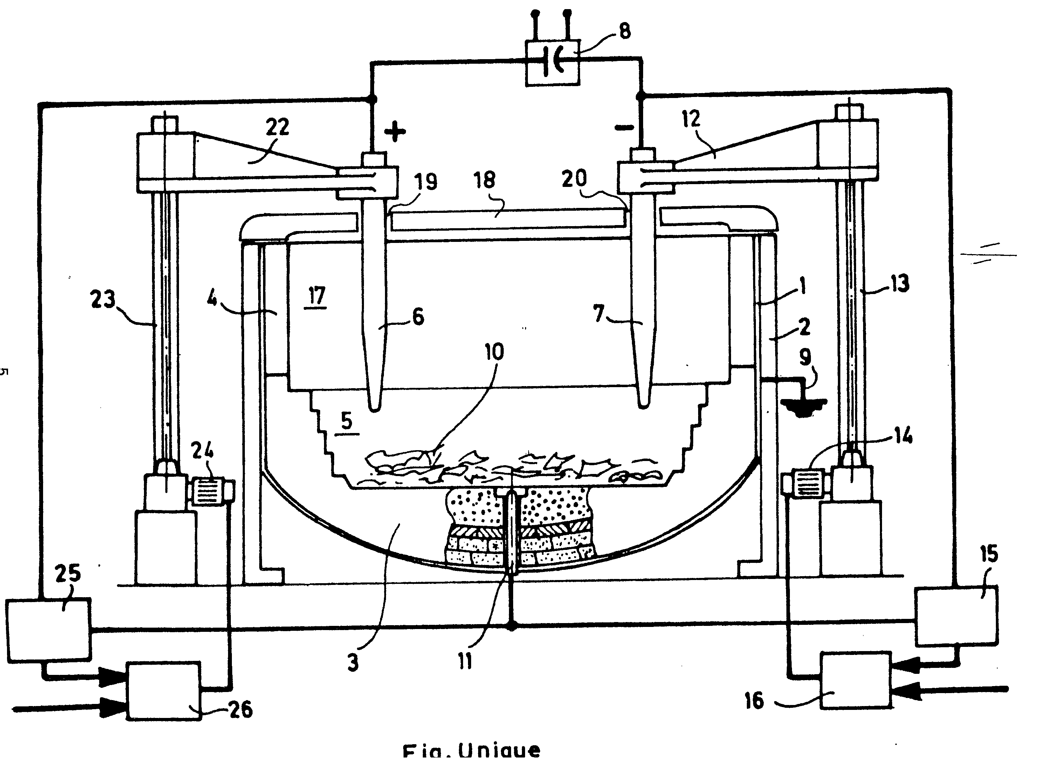

D'autres particularités de l'invention ressortent de la description donnée ci-après d'un mode de réalisation particulier, nullement limitatif, où le four de fusion utilisé dans la mise en œuvre de l'invention est constitué comme il apparaît sur la figure unique jointe, qui le représente schématiquement en coupe verticale partielle.

Le four représenté comporte d'une manière classique une cuve métallique 1, recouverte par une voûte amovible 18, la cuve soutenue par un bâti 2, est complétée intérieurement par un garnissage réfractaire 3 dans sa partie inférieure 5 et par des panneaux refroidis 4 dans sa partie supérieure 17. Cette cuve définit ainsi le «laboratoire» du four, c'est-à-dire l'enceinte de réception de la charge métallique solide à fondre (généralement des ferrailles).

Au cours de la fusion, la masse métallique liquide formée 10 se rassemble dans la partie inférieure 5 qui se remplit ainsi progressivement jusqu'au terme de la fusion, comme montré sur la figure.

Par les orifices 19, 20 ménagés au travers de la voûte 18, deux électrodes 6 et 7 pénètrent verticalement dans la partie supérieure du four. Ces électrodes sont généralement en graphite. La fusion de la charge métallique est assurée électriquement, en y faisant circuler un courant électrique grâce à des arcs créés entre chaque électrode et cette charge. Conformément à l'invention, il s-agit d'un courant continu, les électrodes 6 et 7 étant reliées respectivement aux deux bornes opposées d'une source de courant continu à thyristor 8. En fonctionnement, la masse fondue 10 se trouve donc, par rapport au neutre électrique 9 de la cuve, à un potentiel flottant intermédiaire entre ceux des deux électrodes de polarités opposées.

Le four est équipé pour permettre de détecter ce potentiel flottant et de l'utiliser dans la régulation des électrodes de puissance 6, 7. A cet effet, une sonde conductrice 11 traverse la cuve 1 et le garnissage réfractaire 3, au fond du four, de sorte que son extrémité soit en contact avec la masse en fusion 10. Comme elle n'a pas de rôle direct dans la transmission de la puissance électrique nécessaire à la fusion, elle se présente sous la forme d'une tige métallique de diamètre relativement faible (par exemple 5 ou 10 cm), entourée éventuellement par une chemise de refroidissement pour freiner la fusion de son extrémité au contact du bain.

Les deux électrodes 6 et 7 sont portées par des dispositifs qui permettent de les déplacer verticalement, d'une manière qui est d'ailleurs en elle-même classique du point de vue mécanique. On a ainsi représenté pour chaque électrode une potence support comprenant un bras horizontal 12 (ou 22) à l'extrémité duquel est fixée l'électrode 7 (ou 6) et qui coulisse sur un mât vertical 13 (ou 23) sous la commande d'un système de vérin entraîné par un moteur électrique 14 (ou 24). Le déplacement des électrodes permet d'amener celles-ci tout près des ferrailles pour amorcer les arcs au début d'une opération de fusion, puis de les éloigner une fois les arcs amorcés et de régler la longueur des arcs tout au long de l'opération de fusion à partir des informations fournies par la sonde de potentiel 11.

Ainsi, dans l'exemple considéré, deux ensembles de régulation identiques sont associés respectivement aux deux électrodes 6 et 7 de polarités opposées. Chacun comporte un dispositif de mesure de tension 15 (ou 25) monté entre le conducteur d'alimentation de l'électrode 7 (ou 6) et l'extrémité de la sonde 11 extérieure au four, et un régulateur 16 (ou 26) qui commande la rotation du moteur 14 (ou 24) de manière à maintenir à une valeur de consigne prédéterminée, la différence de potentiel mesurée par le dispositif 15 (ou 25).

Le four selon l'invention peut comporter plus de deux électrodes, bien que l'on n'ait pas en général intérêt à augmenter le nombre de ces électrodes, qui se consomment rapidement et d'autant plus vite que la puissance transmise est plus élevée. On remarquera à ce sujet que la sonde de détection du potentiel de la masse en cours de fusion ne se consomme pratiquement pas et qu'elle est facile à refroidir avec une efficacité qui évite qu'elle s'échauffe jusqu'à la fusion.

## Revendications

1. Procédé de fusion métallurgique, suivant lequel on provoque la circulation d'un courant électrique dans une masse métallique à fondre, par au moins un arc électrique créé entre cette masse et une électrode de puissance (6) disposée au-dessus d'elle, caractérisé en ce que l'on crée deux tels arcs électriques, chacun entre ladite masse et l'une des électrodes d'une piare de deux électrodes (6, 7), que l'on alimente chacune en courant continu, respectivement sous deux polarités différentes.

2. Procédé selon la revendication 1, caractérisé en ce que l'on détecte le potentiel pris en fonctionnement par ladite masse (10).

3. Procédé selon la revendication 2, caractérisé en ce que pendant la fusion, on maintient à une valeur de consigne prédéterminée la différence de potentiel entre chaque électrode et ladite masse en agissant sur la position de cette électrode.

4. Four de fusion métallurgique comportant au moins une paire d'électrodes de puissance (6, 7) en voûte (18) pénétrant dans la partie supérieure (17) du four, et une source d'alimentation électrique (8) pour appliquer un courant continu à chacune des électrodes (6, 7) de ladite paire, respectivement sous deux polarités différentes, caractérisé en ce que, la distance entre les électrodes de chaque paire est telle que des arcs électriques sont créés entre chaque électrode et la masse métallique à fondre.

5. Four selon la revendication 4, caractérisé en ce qu'il comporte une sonde (11) de détection du potentiel de la masse fondue (10), en contact électrique avec ladite masse à travers le fond du four.

6. Four selon la revendication 5, caractérisé en ce qu'il comporte des moyens (15, 25) pour mesurer la différence de potentiel entre chaque électrode (7, 6) et ladite sonde (11) et des moyens (16, 26) pour la maintenir à une valeur de consigne prédéterminée par réglage de la position de l'électrode correspondante en déplacement vertical.

## Patentansprüche

1. Metallurgisches Schmelzverfahren, bei dem das Fliessen eines elektrischen Stroms in einer zu schmelzenden Metallmasse bewirkt wird durch mindestens einen zwischen dieser Masse und einer oberhalb von ihr angeordneten Leistungselektrode (6) erzeugten Lichtbogen, dadurch gekennzeichnet, dass zwei derartige Lichtbogen erzeugt werden, ein jeder zwischen dieser Masse und einer der Elektroden eines Elektrodenpaars (6, 7) und dass jede mit Gleichstrom versorgt wird, jedoch mit zwei unterschiedlichen Polaritäten.

2. Verfahren nach Anspruch 1, dadurch gekennzeichnet, dass das von dieser Masse (10) während des Betriebs angenommene Potential gemessen wird.

3. Verfahren nach Anspruch 2, dadurch gekennzeichnet, dass die Potentialdifferenz zwischen jeder Elektrode und dieser Masse beim Schmelzen auf einem vorgegebenen Sollwert gehalten wird durch Einwirkung auf die Position dieser Elektroden.

4. Metallurgischer Schmelzofen mit wenigstens einem Paar Leistungselektroden (6, 7) in einem gekrümmten Deckel (18), die sich in dem oberen Abschnitt (17) des Ofens erstrecken und mit einer elektrischen Versorgungsquelle (8) um jede der Elektroden (6, 7) des genannten Paars mit einem Gleichstrom zweier unterschiedlicher Polaritäten zu versorgen, dadurch gekennzeichnet, dass der Abstand zwischen den Elektroden eines jeden Paars derart ist, dass Lichtbögen zwischen jeder Elektrode und der zu schmelzenden Metallmasse erzeugt werden.

5. Ofen nach Anspruch 4, dadurch gekennzeichnet, dass er eine Sonde (11) aufweist zur Messung des Potentials der geschmolzenen Masse (10) durch elektrischen Kontakt mit dieser Masse durch den Boden des Ofens hindurch.

6. Ofen nach Anspruch 5, dadurch gekennzeichnet, dass er eine Anordnung (15, 25) aufweist zur Messung der Potentialdifferenz zwischen jeder Elektrode (7, 6) und der Sonde (11) und eine Anordnung (16, 26) um sie auf einem vorgegebenen Sollwert zu halten durch Veränderung der Position der entsprechenden Elektrode mittels vertikalem Verschieben.

## Claims

1. Metallurgical melting process, according to which an electric current is made to flow through a metal mass to be melted, by at least one electric arc produced between this mass and a power electrode (6) arranged above it, characterized in that two such electric arcs are produced, each between the said mass and one of the electrodes of a pair of two electrodes (6, 7), each of which is supplied with direct current, of two different polarities, respectively.

2. Process according to Claim 1, characterized in that the voltage taken by the said mass (10) during operation is detected.

3. Process according to Claim 2, characterized in that during the melting, the voltage difference between each electrode and the said mass is maintained at a predetermined set value by affecting the position of this electrode.

4. Metallurgical melting furnace comprising at least one pair of power electrodes (6, 7) in a roof (18) entering the upper part (17) of the furnace, and a source of electric supply (8) for applying a continuous current to each of the electrodes (6, 7) of the said pair, with two different polarities, respectively, characterized in that the distance between the electrodes of each pair is such that electric arcs are produced between each electrode and the metal mass to be melted.

5. Furnace according to Claim 4, characterized in that it comprises a probe (11) for detecting the voltage of the molten mass (10), in electric contact with the said mass through the bottom of the furnace.

6. Furnace according to Claim 5, characterized in that it comprises means (15, 25) for measuring the voltage difference between each electrode (7, 6) and the said probe (11) and means (16, 26) for maintaining it at a predetermined set value by adjusting the position of the corresponding electrode by a vertical movement.

Fig. Unique